# DEMANDE DE BREVET EUROPEEN

(11) **EP 2 132 980 A1**
(43) Date de publication de la demande: **16.12.2009**
(21) Numéro de dépôt: 08356086.2
(22) Date de dépôt: 13.06.2008
(51) Int. Cl.: A01J 25/13

(54) **Bloc-fonds ventilé pour la fabrication des fromages**

(71) Demandeur: Mino Gaillard SNDG, 01580 Izernore (FR)
(72) Inventeur: Goillon, Jean-Pierre, 01100 Veyziat/Oyonnax (FR)
(74) Mandataire: Bratel, Gérard

(57) **Abrégé**

Le bloc-fonds (2) réunit les fonds inférieurs (7) d'une pluralité de moules à fromage unitaires (4) et les fonds supérieurs (8) d'une pluralité correspondante d'autres moules à fromage unitaires. Les fonds supérieurs (8) sont pourvus chacun d'une couronne périphérique (11) qui présente des fenêtres latérales d'aération (13) de dimensions importantes. Ainsi, en utilisation, il s'établit une circulation de l'air (F3) en direction sensiblement horizontale et en contact direct avec la face supérieure (17) de chaque fromage (16) en cours de fabrication, placé dans un moule unitaire (4). En conséquence, une uniformité de température, donc de conditions d'égouttage, est obtenue pour tous les fromages d'une pile de tels blocs-fonds (2).

## Description

La présente invention concerne, de façon générale, le domaine du matériel de fromagerie et elle à pour objet, plus particulièrement, un bloc-fonds ventilé utilisable pour la fabrication industrielle des fromages.

Il est actuellement bien connu, dans la fabrication industrielle des fromages, de regrouper des moules unitaires, y compris leurs fonds, pour constituer des ensembles plus ou moins étendus, de forme générale rectangulaire, dénommés "blocs-moules" s'ils regroupent les moules complets, et désignés plutôt comme "blocs-fonds" s'ils regroupent seulement des fonds de moules. Ces blocs-moules ou blocs-fonds sont utilisés plus particulièrement pour les opérations d'égouttage des fromages en cours de fabrication. Dans le cadre de cette utilisation, les blocs-moules ou blocs-fonds sont empilés sur une certaine hauteur, leur configuration étant étudiée pour que le petit-lait ou lactosérum puisse s'écouler à l'extérieur des moules, depuis un niveau de moules quelconque de la pile.

Considérant plus particulièrement les systèmes de blocs-fonds, les réalisations actuellement connues peuvent être décrites et classées comme suit :

Dans le cas de blocs-fonds classiques, tels que décrits dans le brevet français 2429555 au nom du Demandeur, les moules unitaires possèdent des parois latérales perforées mais les fonds inférieur et supérieur de chaque moule unitaire sont pleins. L'air peut circuler verticalement entre les différentes colonnes de moules unitaires résultant de l'empilement, mais il n'existe aucune possibilité pour l'air de circuler horizontalement et, en particulier, de venir au contact des fromages en cours de fabrication, placés à l'intérieur des moules unitaires.

On connaît aussi des blocs-fonds à "double fond", avec pour chaque moule unitaire un fond perforé surmontant un fond plein, de manière à former un double fond. Dans ce cas, l'air peut circuler verticalement entre les colonnes de moules, et aussi horizontalement dans l'espace libre de faible hauteur délimité par le double fond. Cependant, les fromages ne sont ici pas davantage mis au contact de l'air, puisque chaque moule unitaire est fermé à sa partie supérieure par le fond plein du moule immédiatement supérieur, lequel forme un "couvercle" qui isole le fromage placé dans le moule unitaire considéré.

D'autres blocs-fonds connus sont à "triple fond", c'est-à-dire avec, pour chaque moule unitaire, un plateau déflecteur plein situé entre deux fonds perforés, l'un supérieur et l'autre inférieur -voir le brevet FR 2688117. Dans ce cas également, l'air peut circuler horizontalement entre les moules, mais les fromages ne sont jamais mis en contact direct avec cet air, un "couvercle" isolant chaque fromage. De plus, les éléments qui ceinturent ici les blocs-moules empêchent l'arrivée latérale d'air.

De manière analogue, dans le cas du brevet FR 2798819 qui utilise un "support d'égouttage" formé de deux plaques horizontales maintenues à distance l'une de l'autre, l'air peut circuler horizontalement entre les moules à fromage, mais les fromages ne sont jamais en contact direct avec cet air, les parties des plaques précitées qui recouvrent les moules formant en quelque sorte des "couvercles" qui isolent les fromages.

Le brevet FR 2599216 décrit un bloc-moules regroupant un certain nombre de faisselles. Celles-ci comportent, dans leurs parois, des ouvertures latérales supérieures qui sont de petites dimensions et qui assurent une bonne évacuation du petit-lait ou lactosérum, après retournement de la pile de moules, ceci en combinaison avec des rigoles annulaires collectrices. En aucun cas, il ne s'agit ici d'ouvertures d'aération.

De manière analogue, dans le brevet européen EP 0244330 au nom du Demandeur, les moules unitaires comportent des ouvertures d'égouttage supérieures, de petites dimensions, qui interviennent après retournement et laissent alors passer le petit-lait, en combinaison avec des rainures radiales et avec des gorges annulaires. Un bord relevé important, situé devant ces ouvertures d'égouttage, fait aussi obstacle à une (supposée) circulation d'air horizontale.

Tous ces matériels connus ont une même faiblesse : dans une pile constituée de blocs-moules ou de blocs-fonds ou analogues, aucune des faces du fromage ne se trouve en contact direct avec l'air ambiant. Chaque colonne de moules crée des enceintes plus ou moins fermées, sans aération notable, qui sont propices à conserver plus longtemps et d'une manière non uniforme une température trop élevée en leur sein, ceci d'autant plus que la matière plastique habituellement constitutive des blocs-moules et des blocs-fonds possède des propriétés d'isolation thermique.

Pour une certaine technique de fabrication des fromages, actuellement de plus en plus courante, avec égouttage de type lactique qui s'appuie sur l'activité microbienne pour activer l'égouttage des fromages, le manque de circulation d'air entraîne la formation de fromages trop égouttés, donc trop secs, avec un développement microbien trop actif. Ce manque de circulation d'air entraîne aussi une forte disparité d'égouttage entre les fromages situés à la périphérie de la pile de blocs-fonds, fromages qui sont malgré tout en contact indirect avec l'air ambiant de la salle d'égouttage, et les autres fromages situées plus à l'intérieur de cette même pile de blocs-fonds, qui eux sont totalement isolés de l'air ambiant de la salle d'égouttage, cette disparité subsistant même si l'air peut circuler verticalement entre les colonnes de moules unitaires.

Il est aussi rappelé que le système traditionnel de fabrication de fromages, qui utilise des faisselles individuelles posées sur des tables d'égouttage superposées réalisées en acier inoxydable, permet une meilleure ventilation des faisselles et des fromages placés dans celle-ci, avec homogénéité de traitement, grâce aux effets combinés :
- de la libre circulation horizontale de l'air, dans l'espace situé entre deux plaques d'égouttage consécutives ;
- du contact direct de la face supérieure de chaque fromage avec l'air en circulation, aucun "couvercle" ne venant ici isoler les fromages ;
- et de la très bonne conductivité thermique de l'acier inoxydable, constitutif des tables d'égouttage.

Toutefois, l'utilisation de faisselles individuelles complique les manipulations pour les opérations d'égouttage, de retournement et de manutention.

La présente invention vise à remédier à l'ensemble des inconvénients précédemment exposés, et elle a donc pour but de fournir un bloc-fonds perfectionné, permettant en utilisation une circulation d'air y compris au contact direct des fromages en cours de fabrication, de manière notamment à maîtriser les conditions de température pour chaque fromage en cours d'égouttage, en permettant un changement rapide et uniforme de la température pour tous les fromages d'une pile de tels blocs-fonds.

A cet effet, l'invention a pour objet un bloc-fonds pour la fabrication des fromages, en particulier pour les opérations d'égouttage, le bloc-fonds réunissant les fonds inférieurs d'une pluralité de moules à fromages unitaires et les fonds supérieurs d'une pluralité correspondante d'autres moules à fromages unitaires, les fonds inférieurs et les moules comportant des perforations et/ou trous d'égouttage, ce bloc-moules étant essentiellement caractérisé par le fait qu'au moins les fonds supérieurs sont pourvus chacun d'une couronne périphérique présentant au moins deux fenêtres latérales d'aération, pour une circulation de l'air en direction sensiblement horizontale et en contact direct avec la face supérieure de chaque fromage en cours de fabrication, placé à l'intérieur d'un moule unitaire, les dimensions des fenêtres d'aération étant fortement supérieures à celles des perforations et/ou trous d'égouttage.

Ainsi, l'invention propose un bloc-moules "ventilé", qui permet une circulation de l'air verticale entre les colonnes de moules unitaires, une circulation de l'air horizontale dans l'espace libre entre les fonds inférieurs et les fonds supérieurs du bloc-moule, et une circulation additionnelle de l'air, sensiblement horizontale, l'air entrant dans chaque moule unitaire par au moins une fenêtre latérale et sortant de ce moule unitaire par au moins une autre fenêtre latérale et, le flux d'air qui en résulte venant ainsi lécher la face supérieure du fromage placé dans ledit moule unitaire. En ce qui concerne les fenêtres latérales d'aération, il convient encore de noter que celles-ci ne sauraient être confondues avec des perforations ou trous d'égouttage, étant donné :
- Qu'elles sont ménagées « en plus » des perforations ou trous d'égouttage habituellement existants ;
- Qu'elles se situent dans une position autre que celle des perforations ou trous d'égouttage ; et
- Qu'elles possèdent des dimensions importantes, typiquement d'au moins un centimètre dans toutes les directions alors que les perforations ou trous d'égouttage possèdent des dimensions qui sont typiquement de l'ordre du millimètre, et au maximum d'environ trois à quatre millimètres.

Les fenêtres latérales d'aération peuvent se présenter comme des ouvertures sensiblement rectangulaires, délimitées sur leurs quatre côtés, en particulier sur leur côté inférieur, par le bord inférieur de la couronne périphérique du fond correspondant du bloc-fonds.

En variante, les fenêtres latérales d'aération se présentent comme des échancrures sensiblement rectangulaires, délimitées sur trois côtés seulement, et débouchant sur le bord inférieur de la couronne périphérique du fond correspondant du bloc-fonds. Dans ce dernier cas, l'empilement des blocs-fonds et des blocs-moules réalise malgré tout en utilisation la fermeture des fenêtres d'aération sur leur quatrième côté à savoir le côté inférieur.

Selon une disposition complémentaire avantageuse, les fenêtres latérales d'aération sont délimitées, sur leur côté supérieur et de préférence aussi sur leurs deux côtés verticaux, par une surépaisseur ou « trottoir » faisant saillie à l'extérieur, ayant pour rôle d'empêcher que le lactosérum, s'écoulant depuis le moule unitaire supérieur, ne puisse traverser les fenêtres et se diriger vers la face supérieure du fromage placé dans le moule unitaire considéré.

Dans l'ensemble, on obtient de cette manière un bloc-fonds qui, lorsqu'il est utilisé dans une pile avec d'autres blocs-fonds identiques et avec des blocs-moules intercalés entre ces blocs-fonds, permet une circulation de l'air telle que l'une des faces des fromages soit en contact direct avec l'air extérieur, comme dans le système traditionnel à faisselles individuelles. Ainsi, les fromages fabriqués avec utilisation du bloc-fonds selon la présente invention sont placés dans les mêmes conditions aérauliques que les fromages fabriqués de façon traditionnelle dans des faisselles individuelles posées sur des tables d'égouttage superposées, et l'on obtient une réelle maîtrise des conditions de température pour chaque fromage en cours d'égouttage, sans perturber cet égouttage notamment si les fenêtres d'aération sont entourées d'un « trottoir » ou protégées de manière analogue. Le système obtenu, très ouvert à l'air notamment si l'on prévoit aussi des ouvertures dans les barrettes encadrant le bloc-fonds, permet un changement rapide et uniforme de la température du caillé en modifiant la température de l'air de la salle d'égouttage, avec un minimum d'inertie thermique due à la matière plastique constitutive des blocs-fonds. Enfin, on notera que la solution proposée par l'invention est simple et économique puisqu'elle se limite à la réalisation d'ouvertures ou d'échancrures spécifiques, pouvant être directement obtenues lors du moulage par injection des fonds unitaires, au cours de la fabrication des blocs-moules en matière plastique.

L'invention sera mieux comprise à l'aide de la description qui suit, en référence au dessin schématique annexé représentant, à titre d'exemple, une forme d'exécution de ce bloc-fonds ventilé pour la fabrication des fromages :
Figure 1 est une vue partielle, en perspective, de plusieurs blocs-fonds conformes à la présente invention, entre lesquels sont intercalés des blocs-moules, l'ensemble formant une pile ;
Figure 2 est une vue en coupe verticale passant par deux colonnes adjacentes de moules unitaires de la pile selon la figure 1 ;
Figure 3 est une vue de détail, en coupe verticale, d'un fond inférieur et d'un fond supérieur correspondant appartenant au bloc-fonds de l'invention ;
Figure 4 est un schéma de principe illustrant le fonctionnement de bloc-fonds de l'invention, en ce qui concerne l'égouttage et les circulations d'air.

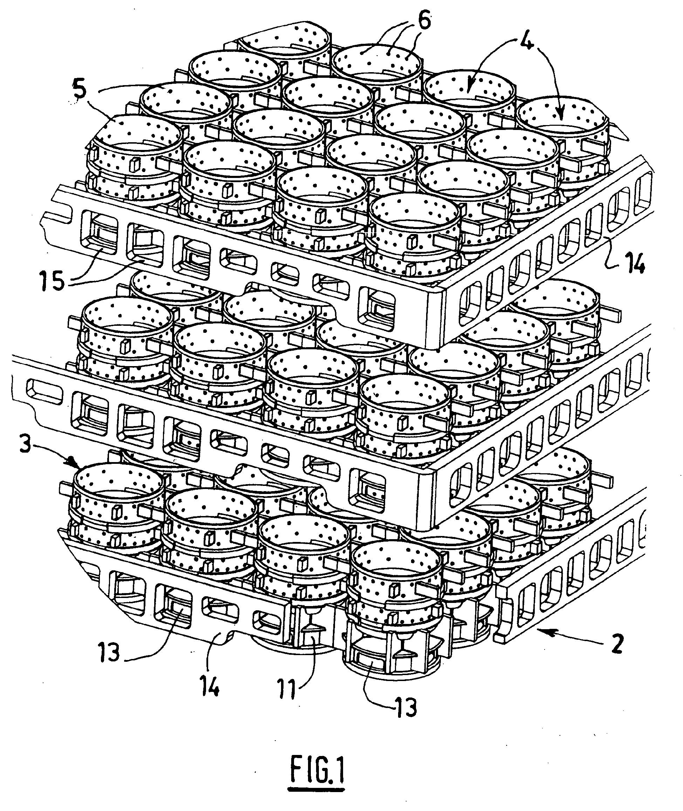

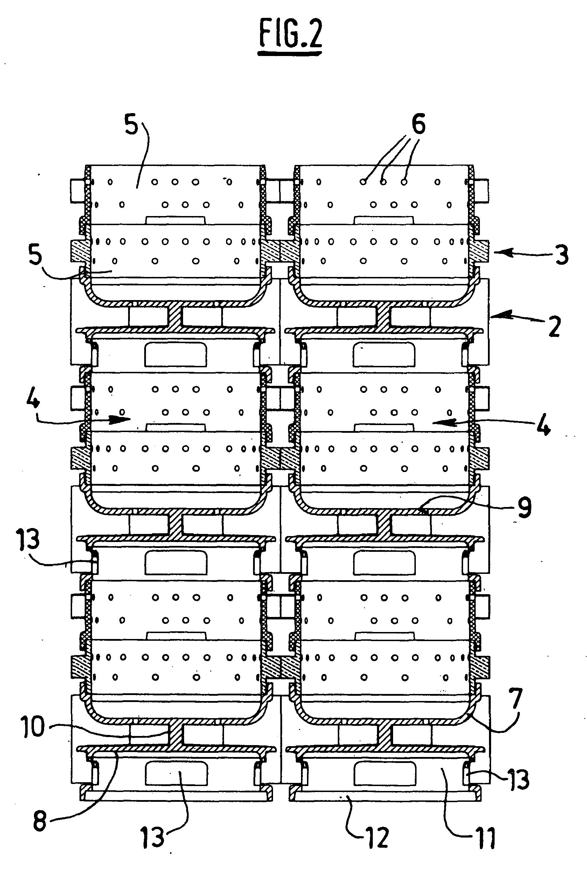

Les figures 1 et 2 montrent une pile réalisée à partir de blocs-fonds 2 et de blocs-moules 3 qui alternent avec les blocs-fonds 2.

Les blocs-moules 3, qui sont ici des blocs-moules sans fonds, comportent des moules unitaires 4 à paroi latérale cylindrique 5, disposés en lignes et en rangées suivant un quadrillage régulier. Chaque paroi latérale cylindrique 5 présente des perforations 6 pour l'égouttage du lactosérum. Dans l'exemple illustré, deux blocs-moules 3, emboîtés directement l'un sur l'autre, sont à chaque fois intercalés entre deux blocs-fonds 2 consécutifs, sur lesquels ils s'emboîtent également.

Chaque bloc-fonds 2 comporte, disposées en lignes et en rangées suivant un quadrillage régulier, des paires de fonds circulaires 7 et 8 superposés. Pour chaque paire, un premier fond circulaire 7 comportant des trous d'égouttage 9 constitue le fond inférieur d'un moule unitaire 4 constitué par les blocs-moules 3 surmontant le bloc-fonds 2 considéré. Le second fond circulaire 8 de la paire, situé au-dessous du premier fond 7 et rendu solidaire de celui-ci par une partie intermédiaire 10, se présente comme un disque plein et constitue le fond supérieur d'un moule unitaire 4 constitué par le bloc-moules 3 situé immédiatement sous le bloc-fonds 2 considéré.

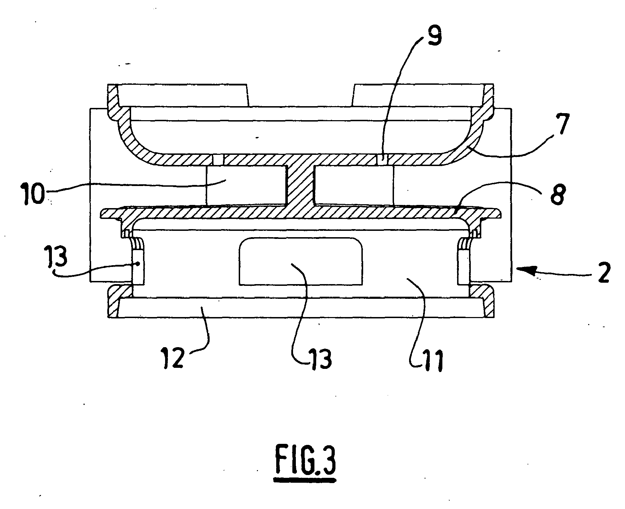

Le second fond circulaire 8, en forme de disque plein, est prolongé vers le bas par une couronne périphérique 11, de forme cylindrique, dont le bord inférieur 12 est prévu pour s'emboîter sur le sommet d'une paroi latérale cylindrique 5 d'un moule unitaire 4 inférieur. Dans la couronne 11 sont ménagées quatre fenêtres latérales d'aération 13, chacune de forme générale rectangulaire, séparées les unes des autres par des intervalles angulaires de 90°. Chaque fenêtre d'aération 13 se présente ici comme une ouverture délimitée sur ses quatre côtés, le côté inférieur étant en particulier délimité par la région du bord inférieur 12 de la couronne 11 - voir aussi la figure 3. L'ensemble des paires de fonds 7 et 8 est encadré par des barrettes 14 longitudinales et transversales, qui présentent elles aussi des ouvertures 15 de forme carrée ou rectangulaire (voir figure 1), se situant à hauteur des fenêtres 13.

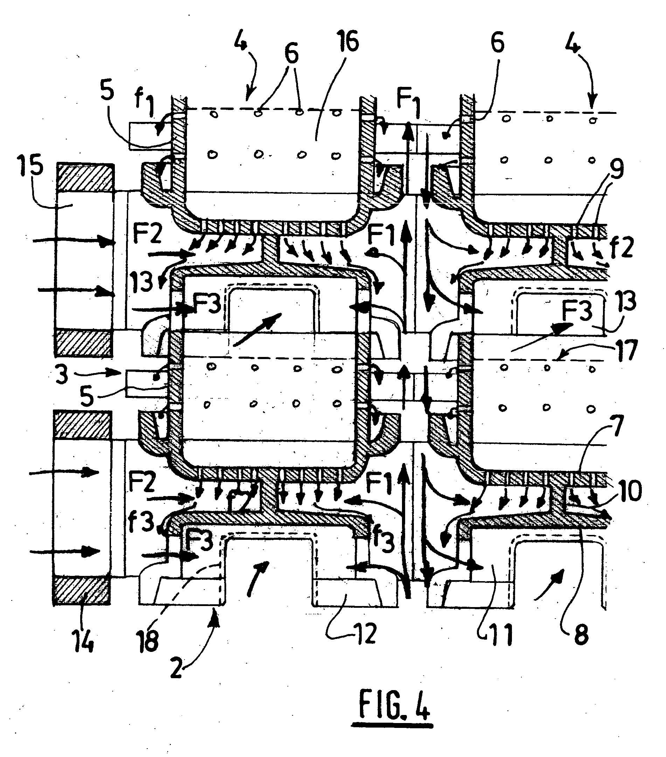

En utilisation, comme le montre la figure 2 et comme le schématise aussi la figure 4, lorsque les blocs-fonds 2 et les blocs-moules 3 sont empilés, il se forme des colonnes de moules unitaires 4, chaque moule unitaire 4 étant fermé à sa base par un fond circulaire 7 appartenant à un bloc-fonds 2, et étant fermé à son sommet par un fond circulaire 8 appartenant à un autre bloc-fonds 2. La couronne 11 associée à ce fond 8 présente, pour le moule unitaire 4 considéré, quatre fenêtres latérales d'aération 13 situées dans ia partie supérieure de ce moule 4. Au moins une portion des ouvertures 15 des barrettes 14 de chaque bloc-fonds 2 se situe à même hauteur que les fenêtres latérales d'aération 13 de ce même bloc-fonds 2.

Dans chaque moule unitaire 4 prend place en utilisation un fromage 16 en cours de fabrication, et plus particulièrement en cours d'égouttage, dont la face supérieure 17 se situe plus bas que le bord inférieur des fenêtres latérales d'aération 13 de ce moule 4. L'égouttage s'effectue par écoulement gravitaire du lactosérum au travers des perforations 6 de la paroi latérale cylindrique 5 du moule 4 et aussi au travers des trous d'égouttage 9 du fond inférieur 7 de ce moule 4, comme l'indiquent les flèches f1 et f2. Le lactosérum tombant ainsi sur le fond supérieur 8 du moule 4 immédiatement inférieur s'écoule vers la périphérie de ce fond 8, suivant les flèches f3, et s'évacue grâce à la légère pente dudit fond 8. Une surépaisseur ou "trottoir" 18, faisant saillie à l'extérieur sur le côté supérieur et sur les deux côtés verticaux de chaque fenêtre latérale d'aération 13, évite toute entrée indésirable de lactosérum dans le moule 4 inférieur, par cette fenêtre 13.

Simultanément, la pile de blocs-fonds 2 et de blocs-moules 3 est le siège de circulations d'air, avec :
- une circulation d'air verticale, suivant les flèches F1, entre les différentes colonnes de moules unitaires 4 ;
- une circulation d'air horizontale, suivant les flèches F2, dans les espaces libres situés entre les fonds 7 et 8 de chaque bloc-fonds 2 ;
- une autre circulation d'air horizontale, suivant les flèches F3, au niveau des parties supérieures des moules unitaires 4, l'air entrant dans ces moules 4 et en ressortant par les fenêtres latérales d'aération 13, et venant ainsi lécher la face supérieure 17 de chaque fromage 16 en cours de fabrication, pour favoriser son refroidissement tout en homogénéisant les températures, donc les conditions d'égouttage, d'un fromage 16 à un autre.

Les ouvertures 15 des barrettes 14 qui encadrent les blocs-fonds 2 participent aux circulations d'air horizontales, en autorisant la libre circulation de l'air ambiant.

De plus, ces barrettes 14 protègent les blocs-fonds 2 contre les chocs, et elles permettent la manipulation manuelle ou automatisée de ces blocs-fonds 2.

Dans une variante, illustrée par la figure 4 (voir notamment au bas de cette figure), les fenêtres latérales d'aération 13 des blocs-fonds 2 se présentent comme des échancrures rectangulaires délimitées sur trois côtés seulement, c'est-à-dire que le fond inférieur 12 de la couronne 11 est interrompu à l'emplacement de chaque fenêtre 13. Dans ce cas, une fois la pile formée, c'est le bord supérieur d'une paroi latérale 5 d'un moule unitaire 4 inférieur qui vient fermer chaque fenêtre 13 sur son quatrième côté, à savoir le côté inférieur.

Dans tous les cas, les fenêtres latérales d'aération 13 sont dimensionnées, positionnées et profilées de telle sorte qu'elles ne peuvent être traversées que par de l'air, au cours de l'égouttage des fromages 16, et qu'elles ne laissent donc pas passer le lactosérum. En particulier, les dimensions de ces fenêtres d'aération 13 sont fortement supérieures à celles des perforations 6 et trous 9 d'égouttage.

L'on ne s'éloignerait pas du cadre de l'invention, telle que définie dans les revendications annexées :
- en modifiant le nombre des moules unitaires et des fonds correspondants ;
- en changeant le nombre et la forme des fenêtres latérales d'aération ;
- en appliquant l'invention à des moules et à des fonds correspondants de toutes formes et dimensions, en particulier de section horizontale non circulaire, selon la forme des fromages à fabriquer.

## Revendications

1. Bloc-fonds pour la fabrication des fromages, en particulier pour les opérations d'égouttage, le bloc-fonds (2) réunissant les fonds inférieurs (7) d'une pluralité de moules à fromage unitaires (4) et les fonds supérieurs (8) d'une pluralité correspondante d'autres moules à fromage unitaires (4), les fonds inférieurs (7) et les moules (4) comportent des perforations (6) et/ou trous (9) d'égouttage, **caractérisé en ce qu'**au moins les fonds supérieurs (8) sont pourvus chacun d'une couronne périphérique (11) présentant au moins deux fenêtres latérales d'aération (13), pour une circulation de l'air (F3) en direction sensiblement horizontale et en contact direct avec la face supérieure (17) de chaque fromage (16) en cours de fabrication, placé à l'intérieur d'un moule unitaire (4), les dimensions des fenêtres d'aération (13) étant fortement supérieures à celles des perforations (6) et/ou trous (9) d'égouttage.

2. Bloc-fonds selon la revendication 1, **caractérisé en ce que** les fenêtres latérales d'aération (13) se présentent comme des ouvertures sensiblement rectangulaires délimitées sur leurs quatre côtés, en particulier sur leur côté inférieur, par le bord inférieur (12) de la couronne périphérique (11) du fond (8) correspondant du bloc-fonds (2).

3. Bloc-fonds selon la revendication 1, **caractérisé en ce que** les fenêtres latérales d'aération (13) se présentent comme des échancrures sensiblement rectangulaires, délimitées sur trois côtés seulement, et débouchant sur le bord inférieur (12) de la couronne périphérique (11) du fond (8) correspondant du bloc-fonds (12).

4. Bloc-fonds selon l'une des revendications 1 à 3, **caractérisé en ce que** les fenêtres latérales d'aération (13) sont délimitées, sur leur côté supérieur et de préférence aussi sur leurs deux côtés verticaux, par une surépaisseur ou "trottoir" (18) faisant saillie à l'extérieur, ayant pour rôle d'empêcher que le lactosérum, s'écoulant depuis le moule unitaire (4) supérieur, ne puisse traverser les fenêtres (13) et se diriger vers la face supérieure (17) du fromage (16) placé dans le moule unitaire (4) considéré.

5. Bloc-fonds selon l'une des revendications 1 à 4, **caractérisé en ce qu'**il est encadré par des barrettes (14) présentant des ouvertures (15), au moins une portion de ces ouvertures (15) se situant à même hauteur que les fenêtres latérales d'aération (13) précitées.
